# EUROPÄISCHE PATENTSCHRIFT

(11) **EP 3 725 474 B1**
(45) Veröffentlichungstag und Bekanntmachung des Hinweises auf die Patenterteilung: **25.01.2023**
(21) Anmeldenummer: 20169658.0
(22) Anmeldetag: 15.04.2020
(51) Int. Cl.: B26D 3/26

(54) **LEBENSMITTELZERKLEINERUNGSSYSTEM**
FOOD COMMINUTION SYSTEM
SYSTÈME DE BROYAGE DES DENRÉES ALIMENTAIRES

(30) Priorität: 17.04.2019 LU 101185
(43) Veröffentlichungstag der Anmeldung: 21.10.2020
(73) Patentinhaber: Genius GmbH, 65549 Limburg (DE)
(72) Erfinder: REPAC, Cedomir, 65611 Brechen (DE)
(74) Vertreter: Hoffmann, Jürgen

(56) Entgegenhaltungen:
- DE-U1-202009 011 687
- DE-U1-202017 107 348

## Beschreibung

Die Erfindung betrifft ein Lebensmittelzerkleinerungssystem aufweisend eine, insbesondere als Handgerät ausgebildete, Lebensmittelzerkleinerungsvorrichtung mit einem Basisteil, das eine Aufnahme für ein Schneidteil aufweist, und mit einem gelenkig mit dem Basisteil verbundenen Betätigungsteil, das zum Hindurchdrücken von zu zerkleinerndem Lebensmittelgut durch ein in die Aufnahme eingesetztes Schneidteil aus einer Einlegestellung gegen das Schneidteil in eine Schließstellung und anschließend von der Schließstellung wieder in die Einlegestellung schwenkbar ist.

Aus DE 10 2007 042 660 A1 ist eine als Handgerät ausgebildete Lebensmittelzerkleinerungsvorrichtung bekannt, die zwei Handgriffteile aufweist. An einem Handgriffteil ist ein Pressstempel und an dem anderen Handgriffteil ein Schneidteil angeordnet. Das Schneidteil weist eine Schneidklingenanordnung auf, mittels der das Lebensmittelgut in Spalten geschnitten werden kann. Ähnliche Geräte sind aus US 2014/0190019 A1, DE 102 42 651 A1 und aus EP 1 874 508 B1 bekannt. Die Einsatzmöglichkeiten derartiger Lebensmittelzerkleinerungsvorrichtungen sind begrenzt.

Aus DE 20 2017 107 348 U1 ist eine Vorrichtung zum Zerkleinern von Lebensmitteln mit einem Basisteil, das eine Aufnahme für ein Schneidteil aufweist, und mit einem Betätigungsteil, das gelenkig mit dem Basisteil verbunden ist und das gegen das Basisteil schwenkbar ist, um zu zerkleinerndes Gut entlang einer Durchdrückrichtung durch ein in die Aufnahme eingesetztes Schneidteil zu drücken, bekannt. Es sind bei dieser Vorrichtung mehrere Schneidteile vorhanden, wobei die Aufnahme dazu ausgebildet ist, wenigstens zwei Schneidteile übereinander aufzunehmen, so dass zu zerkleinerndes Gut mittels einer Schwenkbewegung des Betätigungsteils gegen das Basisteil durch die übereinander in der Aufnahme angeordneten Schneidteile hindurch drückbar ist, wobei die zwei Schneidteile mit unterschiedlichen Drehausrichtungen relativ zueinander in der Aufnahme anordenbar sind.

Aus DE 20 2009 011 687 U1 ist ein Küchenhobel bekannt, der ein Schneidteil mit einer Gleitbahn zum Verschieben eines zu zerkleinernden Schneidguts, insbesondere Gemüse oder Obst, aufweist. Das Schneidteil weist wenigstens eine Klinge auf, die an der Gleitbahn derart angeordnet ist, daß sie vom Schneidgut während seiner Verschiebung Schneidgutteile abschneidet. Der Küchenhobel weist ferner ein Schneidgitter sowie eine Drückeinrichtung auf, die dazu ausgelegt ist, Schneidgutteile zu ihrer weiteren Zerkleinerung durch das Schneidgitter zu drücken.

Es ist daher die Aufgabe der vorliegenden Erfindung, ein Lebensmittelzerkleinerungssystem anzugeben, das flexibel einsetzbar ist und weitere Einsatzmöglichkeiten bietet.

Die Aufgabe wird durch ein Lebensmittelzerkleinerungssystem der eingangs genannten Art gelöst, das gekennzeichnet ist durch ein zusätzliches Zerkleinerungswerkzeug, das an der Lebensmittelzerkleinerungsvorrichtung in einer Arbeitsposition festlegbar ist und das einen Befestigungsabschnitt sowie einen Werkzeugabschnitt aufweist, wobei der Befestigungsabschnitt in der Arbeitsposition formschlüssig zwischen dem Basisteil und dem Betätigungsteil eingeklemmt ist und wobei der Werkzeugabschnitt in der Arbeitsposition außerhalb der Aufnahme angeordnet ist.

Die Erfindung bietet durch das an die Lebensmittelzerkleinerungsvorrichtung ankoppelbare, zusätzliche Zerkleinerungswerkzeug den ganz besonderen Vorteil, dass auch solche Lebensmittel zerkleinert werden können, die nach dem Prinzip des Hindurchdrückens durch ein Schneidgitter gar nicht oder nicht ohne ein vorheriges Zerteilen in passende Stücke zerkleinert werden können. Beispielsweise kann eine vollständige Gurke oder eine vollständige Zucchini mittels eines als Hobel oder als Reibe ausgebildeten zusätzlichen Zerkleinerungswerkzeugs ohne weiteres zerkleinert werden, ohne dass diese zuvor in Stücke geschnitten werden muss.

Außerdem hat die Erfindung den ganz besonderen Vorteil, dass dem Benutzer zusätzlich zu der Zerkleinerungsart nach Prinzip des Hindurchdrückens durch ein Schneidgitter andere Zerkleinerungsarten, wie beispielsweise Reiben oder Hobeln, zur Verfügung gestellt werden können.

Die Ankoppelbarkeit des zusätzlichen Zerkleinerungswerkzeugs an der Lebensmittelzerkleinerungsvorrichtung kann auf ganz unterschiedliche Weise realisiert sein. Von ganz besonderem Vorteil sind insbesondere diejenigen Ausführungen, bei denen das zusätzliche Zerkleinerungswerkzeug an der Lebensmittelzerkleinerungsvorrichtung festlegbar ist, ohne dass das Basisteil und/oder das Betätigungsteil hierfür zuvor verändert oder voneinander getrennt werden müssen.

Bei einer vorteilhaften Ausführung weist das Betätigungsteil oder das Basisteil ein Gegenbefestigungsmittel auf, das dazu ausgebildet und bestimmt ist, mit dem Befestigungsabschnitt des zusätzlichen Zerkleinerungswerkzeugs zusammen zu wirken, um das zusätzliche Zerkleinerungswerkzeug in der Arbeitsposition an dem Betätigungsteil oder an dem Basisteil festzulegen. Das Gegenbefestigungsmittel kann vorteilhaft beispielsweise auf der dem Basisteil abgewandten Außenseite des Betätigungsteils angeordnet sein. Das Gegenbefestigungsmittel kann jedoch auch an einer anderen Stelle des Betätigungsteils oder an dem Basisteil angeordnet sein.

Insbesondere kann ganz allgemein vorgesehen sein, dass das zusätzliche Zerkleinerungswerkzeug derart an der Lebensmittelzerkleinerungsvorrichtung festlegbar ist, dass der Werkzeugabschnitt in der Arbeitsposition außerhalb der Aufnahme und außerhalb des Schwenkbereichs des Betätigungsteils angeordnet ist. Eine solche Ausführung ist insbesondere besonders vorteilhaft, wenn die Lebensmittelzerkleinerungsvorrichtung als Handgerät ausgebildet ist.

Beispielsweise kann vorteilhaft vorgesehen sein, dass der Befestigungsabschnitt des zusätzlichen Zerkleinerungswerkzeugs und das Gegenbefestigungsmittel gemeinsam eine Bajonettverbindung bilden. Bei einer besonderen Ausführung wird zum Ankoppeln ein Bajonettvorsprung des Befestigungsabschnitts des zusätzlichen Zerkleinerungswerkzeugs in eine Bajonettaufnahme des Gegenbefestigungsmittels eingeführt und anschließend eine Relativdrehung, beispielsweise um einen Winkel im Bereich von 20 bis 180 Grad, des zusätzlichen Zerkleinerungswerkzeugs relativ zu der Lebensmittelzerkleinerungsvorrichtung ausgeführt, wodurch Gewindeabschnitte des Bajonettvorsprungs und der Bajonettaufnahme in Wirkverbindung treten und eine feste Verbindung hergestellt wird. Um das zusätzliche Zerkleinerungswerkzeug wieder von der Lebensmittelzerkleinerungsvorrichtung zu lösen, muss der Benutzer das zusätzliche Zerkleinerungswerkzeug wieder relativ zu der Lebensmittelzerkleinerungsvorrichtung drehen und kann dann den Bajonettvorsprung des Befestigungsabschnitts wieder aus der Bajonettaufnahme des Gegenbefestigungsmittels heraus nehmen.

Bei einer besonders vorteilhaften Ausführung weist das Gegenbefestigungsmittel wenigstens eine, insbesondere längliche, Ausnehmung auf, während der Befestigungsabschnitt wenigstens einen, insbesondere länglichen, Träger aufweist, der dazu ausgebildet und bestimmt ist, formschlüssig in die Ausnehmung eingeführt zu werden, um das zusätzliche Zerkleinerungswerkzeug in der Arbeitsposition festzulegen. insbesondere kann vorteilhaft vorgesehen sein, dass das Gegenbefestigungsmittel genau zwei längliche und zueinander parallele, Ausnehmungen aufweist, in die der durch zwei längliche Träger gebildete Befestigungsabschnitt des zusätzlichen Zerkleinerungswerkzeugs eingesteckt werden kann, um das zusätzliche Zerkleinerungswerkzeug an der Lebensmittelzerkleinerungsvorrichtung festzulegen. Um das zusätzliche Zerkleinerungswerkzeug wieder von der Lebensmittelzerkleinerungsvorrichtung zu lösen, muss der Benutzer lediglich die Träger wieder aus den Ausnehmungen herausziehen.

Bei einer ganz besonders vorteilhaften Ausführung wird, wie bereits erwähnt, der Befestigungsabschnitt in der Arbeitsposition formschlüssig zwischen dem Basisteil und dem Betätigungsteil eingeklemmt, um das zusätzliche Zerkleinerungswerkzeug an der Lebensmittelzerkleinerungsvorrichtung festzulegen.

Hierbei kann vorteilhaft insbesondere vorgesehen sein, dass der Befestigungsabschnitt, insbesondere formschlüssig und/oder verrastend, in die Aufnahme einfügbar ist. Eine formschlüssige Einfügbarkeit des Befestigungsabschnitts trägt zu einer sicheren und wackelfreien Verankerung in der Arbeitsposition bei.

Alternativ oder zusätzlich kann vorteilhaft auch vorgesehen sein, dass der Befestigungsabschnitt anstelle eines Schneidteils, insbesondere formschlüssig und/oder verrastend, in die Aufnahme eingefügt wird, um das zusätzliche Zerkleinerungswerkzeug an der Lebensmittelzerkleinerungsvorrichtung festzulegen.

Eine ganz besonders sichere und zuverlässige Ankopplung des zusätzlichen Zerkleinerungswerkzeugs ist bei einer Ausführung erreicht, bei der der Befestigungsabschnitt einen in die Aufnahme des Basisteils einfügbaren Rahmen aufweist, in den ein Pressstempel des Betätigungsteils in der Arbeitsposition, insbesondere formschlüssig, eingreift. Zum Herbeiführen der Arbeitsposition wird bei dieser Ausführung der Befestigungsabschnitt des zusätzlichen Zerkleinerungswerkzeugs anstelle eines Schneidteils in die Aufnahme eingesetzt, während sich das Betätigungsteil in der Einlegestellung befindet. Anschließend wird das Betätigungsteil in die Schließstellung überführt. Hierdurch wird der Befestigungsabschnitt formschlüssig zwischen dem Basisteil und dem Betätigungsteil eingeklemmt.

Um das zusätzliche Zerkleinerungswerkzeug wieder von der Lebensmittelzerkleinerungsvorrichtung zu lösen, muss der Benutzer bei dieser Ausführung lediglich das Betätigungsteil von der Schließstellung zurück in die Einlegstellung schwenken, so dass der rahmenförmig ausgebildete Befestigungsabschnitt wieder aus der Aufnahme entnommen werden kann.

Die Lebensmittelzerkleinerungsvorrichtung weist insbesondere bei einer solchen Ausführung, vorteilhaft eine Arretiervorrichtung auf, mittels der das Basisteil und das Betätigungsteil in der Schließstellung relativ zueinander arretiert werden können. Die Arretiervorrichtung hat den ganz besonderen Vorteil, dass der Benutzer das Basisteil und das Betätigungsteil nicht permanent mit einer Hand in der Schließstellung halten muss, um sicherzustellen, dass der Befestigungsabschnitt zwischen dem Basisteil und dem Betätigungsteil eingeklemmt bleibt. Die Arretiervorrichtung kann beispielsweise einen Bedienknopf aufweisen, mittels dem zwischen einer Arretierstellung und einer Freigabestellung umgeschaltet werden kann. Auf diese Weise kann der Benutzer die Arretiervorrichtung mittels des Bedienknopfes in einer Arretierposition überführen, die bewirkt, dass das Basisteil und das Betätigungsteil in der Einlegestellung relativ zueinander arretiert sind und sich der Befestigungsabschnitt nicht ungewollt lösen kann.

Ganz allgemein hat eine solche Arretiervorrichtung den weiteren Vorteil, dass das Basisteil und das Betätigungsteil in der Schließstellung relativ zueinander arretiert werden können, beispielsweise wenn die Lebensmittelzerkleinerungsvorrichtung in einer Schublade verstaut werden soll. Auf diese Weise ist vermieden, dass sich die Lebensmittelzerkleinerungsvorrichtung ungewollt öffnet und sich störend innerhalb der Schublade und/oder mit anderen Geräten verkeilt.

Das zusätzliche Zerkleinerungswerkzeug kann vorteilhaft insbesondere als Hobel oder als Reibe ausgebildet sein. Alternativ kann vorteilhaft vorgesehen sein, dass das zusätzliche Zerkleinerungswerkzeug in der Arbeitsposition zusammen mit wenigstens einem Bauteil der Lebensmittelzerkleinerungsvorrichtung einen Hobel oder eine Reibe bildet.

Bei einer ganz besonders vorteilhaften Ausführung bildet das zusätzliche Zerkleinerungswerkzeug in der Arbeitsposition zusammen mit wenigstens einem Bauteil der Lebensmittelzerkleinerungsvorrichtung einen Hobel oder eine Reibe, wobei insbesondere vorteilhaft vorgesehen sein kann, dass die Lebensmittelzerkleinerungsvorrichtung eine Gleitbahn oder wenigstens einen Teil der Gleitbahn des Hobels oder der Reibe bereitstellt, entlang der ein mittels des Hobels oder der Reibe zu zerkleinerndes Lebensmittelgut hin und her führbar ist. Beispielsweise kann eine, insbesondere von dem Basisteil abgewandte, Außenseite des Betätigungsteils die Gleitbahn oder einen Teil der Gleitbahn aufweisen.

Bei einer vorteilhaften Ausführung weist das zusätzliche Zerkleinerungswerkzeug eine weitere Aufnahme auf, in die ein Schneid- oder Reibeinsatz, insbesondere zerstörungsfrei wieder lösbar und/oder verrastend, einfügbar ist. Das zusätzliche Zerkleinerungswerkzeug fungiert bei dieser Ausführung je nach verwendetem Schneid- oder Reibeinsatz als Hobel oder als Reibe. insbesondere kann das Lebensmittelzerkleinerungssystem mehrere unterschiedliche Schneid- oder Reibeinsätze aufweisen, von denen wahlweise jeweils einer in die weitere Aufnahme eingefügt werden kann. Ein Schneid- oder Reibeinsatz kann beispielsweise wenigsten ein, insbesondere genau ein, Hobelmesser aufweisen. Es ist beispielsweise auch möglich, dass ein Schneid- oder Reibeinsatz mehrere Julienne-Messer oder mehrere Reibvorsprünge aufweist.

In ganz besonders vorteilhafter Weise kann die Lebensmittelzerkleinerungsvorrichtung eine Ankoppelvorrichtung zum Ankoppeln eines Behälters aufweisen. insbesondere kann ein Behälter mittels der Ankoppelvorrichtung derart ankoppelbar sein, dass mittels der Lebensmittelzerkleinerungsvorrichtung zerkleinertes Lebensmittelgut automatisch von dem angekoppelten Behälter aufgefangen wird. Eine solche Ausführung hat den ganz besonderen Vorteil, dass das mittels der Lebensmittelzerkleinerungsvorrichtung zerkleinerte Lebensmittelgut nach dem Zerkleinerungsvorgang in dem Behälter sofort zur Aufbewahrung oder zur Weiterverarbeitung transportiert werden kann.

Ganz besonders vorteilhaft ist eine Ausführung, bei der das zusätzliche Zerkleinerungswerkzeug eine weitere Ankoppelvorrichtung zum Ankoppeln eines Behälters aufweist. Vorzugsweise ist die weitere Ankoppelvorrichtung derart ausgebildet, dass ein Behälter unmittelbar an das zusätzliche Zerkleinerungswerkzeug angekoppelt werden kann, so dass mittels des zusätzlichen Zerkleinerungswerkzeugs zerkleinertes Lebensmittelgut automatisch von dem angekoppelten Behälter aufgefangen wird. Eine solche Ausführung hat den ganz besonderen Vorteil, dass das mittels des zusätzlichen Zerkleinerungswerkzeugs zerkleinerte Lebensmittelgut nach dem Zerkleinerungsvorgang in dem Behälter sofort zur Aufbewahrung oder zur Weiterverarbeitung transportiert werden kann.

Bei einer ganz besonders vorteilhaften Ausführung sind die Ankoppelvorrichtung und die weitere Ankoppelvorrichtung gleich ausgebildet. Ein solches Lebensmittelzerkleinerungssystem hat daher den ganz besonderen Vorteil, dass ein Behälter wahlweise an der Ankoppelvorrichtung oder an der weiteren Ankoppelvorrichtung angekoppelt werden kann. Auf diese Weise kann das Lebensmittelzerkleinerungssystem mit einem einzigen Behälter auskommen. Bei einer solchen Ausführung wird der Behälter in Abhängigkeit davon, ob gerade Lebensmittelgut mittels der Lebensmittelzerkleinerungsvorrichtung oder mittels des zusätzlichen Zerkleinerungswerkzeugs zerkleinert wird, entweder an der Ankoppelvorrichtung oder an der weiteren Ankoppelvorrichtung angekoppelt. Vorzugsweise sind jedoch mehrere Behälter vorhanden, von denen jeder wahlweise an der Ankoppelvorrichtung oder an der weiteren Ankoppelvorrichtung angekoppelt werden kann. Die Behälter sind hierzu wenigstens im Ankopplungsbereich gleich ausgebildet. Insbesondere können mehrere Behälter mit unterschiedlichem Fassungsvermögen vorhanden sein, die vorzugsweise jedoch im Ankopplungsbereich gleich ausgebildet sind, um diese wahlweise an der Ankoppelvorrichtung der Lebensmittelzerkleinerungsvorrichtung oder an der weiteren Ankoppelvorrichtung des zusätzlichen Zerkleinerungswerkzeugs festlegen zu können.

Die Lebensmittelzerkleinerungsvorrichtung kann vorteilhaft als Handgerät ausgebildet sein. Eine solche Ausführung kann besonders kompakt ausgebildet werden und nimmt wenig Stauraum in Anspruch, wenn sie nicht gebraucht wird. insbesondere kann die Lebensmittelzerkleinerungsvorrichtung vorteilhaft als ein Handgerät ausgebildet und dazu ausgebildet und bestimmt sein, bei einem Zerkleinerungsvorgang, insbesondere ohne Abstellen auf einer Arbeitsfläche, in der Hand oder in den Händen gehalten zu werden. insbesondere hierzu kann vorteilhaft vorgesehen sein, das Basisteil ein erstes Handgriffteil aufweist und das Betätigungsteil ein zweites Handgriffteil aufweist, die beide mit den Fingern einer Hand gemeinsam umgreifbar und, insbesondere zangenartig, gegeneinander drückbar angeordnet sind.

Das zusätzliche Zerkleinerungswerkzeug kann vorteilhaft einen Aufstellfuß aufweisen, mittels dem das Zerkleinerungswerkzeug bei einem Zerkleinerungsvorgang, bei dem ein zu zerkleinerndes Lebensmittelgut mit einer Hand über die Gleitbahn hin- und hergeführt wird, an einer Arbeitsfläche abgestützt werden kann, während die in der Schließstellung befindliche Lebensmittelzerkleinerungsvorrichtung gleichzeitig mit der anderen Hand frei gehalten wird.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind..

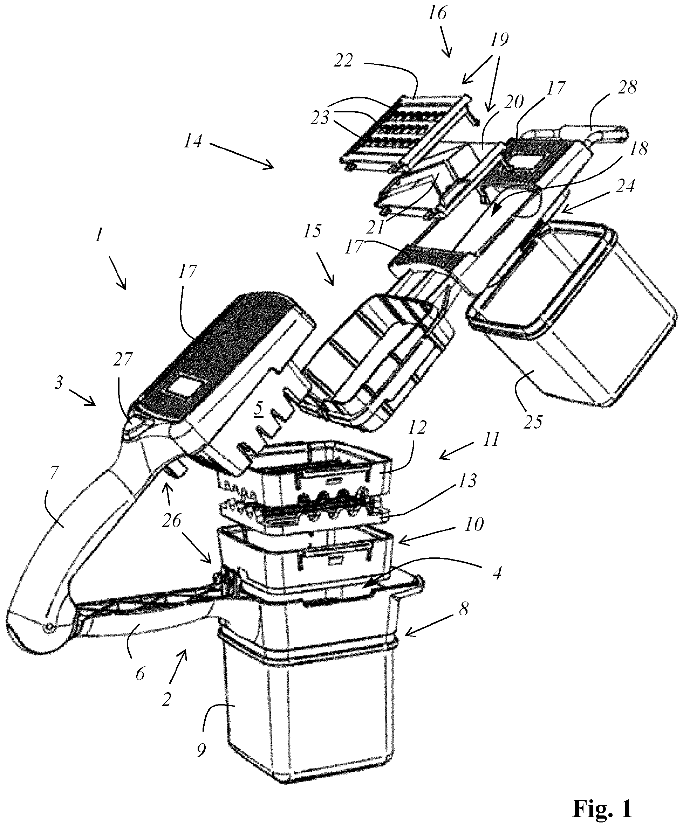

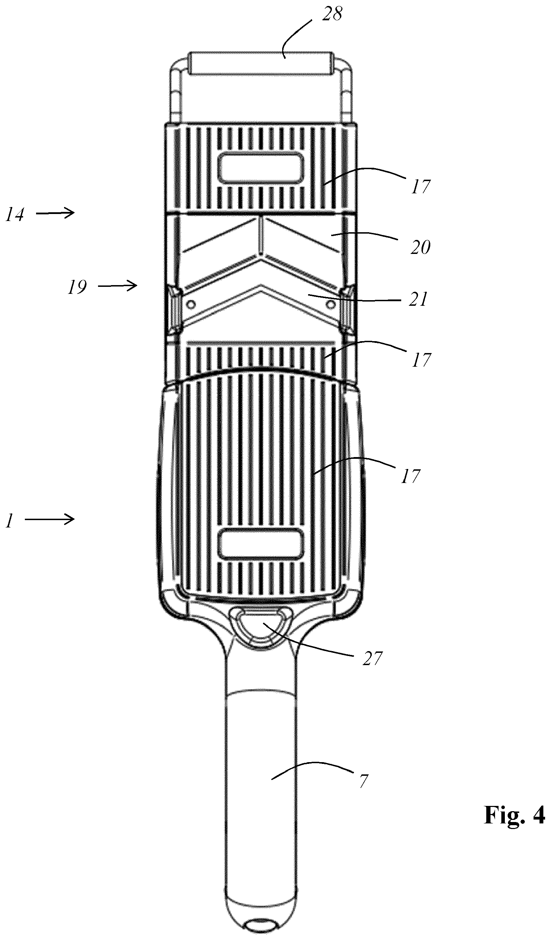

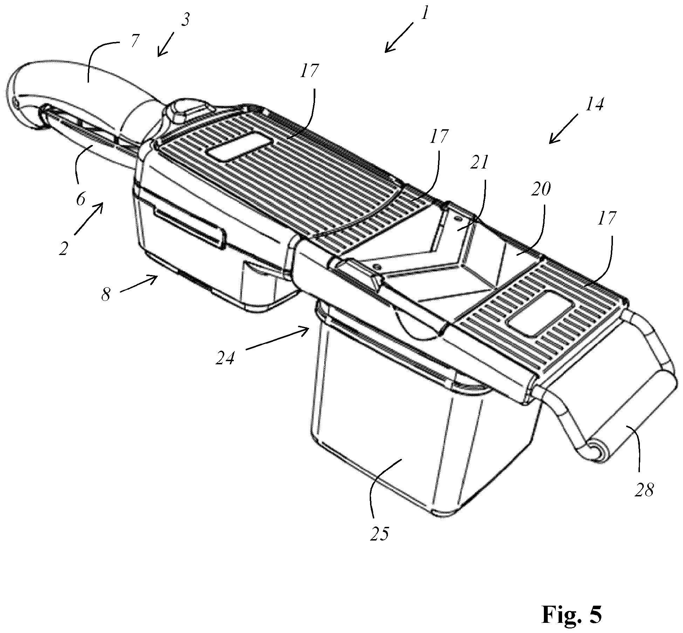

Die Figuren 1 bis 6 zeigen ein Ausführungsbeispiel eines erfindungsgemäßen Lebensmittelzerkleinerungssystems, das eine Lebensmittelzerkleinerungsvorrichtung 1 mit einem Basisteil 2 und einem Betätigungsteil 3 aufweist.

Das Basisteil 2 weist eine Aufnahme 4 für ein Schneidteil 10, 11 auf. Das Betätigungsteil 3 hat einen Pressstempel 5 und ist gelenkig mit dem Basisteil 2 verbunden. Das Betätigungsteil 3 kann zum Hindurchdrücken von zu zerkleinerndem Lebensmittelgut durch das Schneidteil 10, 11 aus einer Einlegestellung gegen das Schneidteil 10, 11 in eine Schließstellung und anschließend von der Schließstellung wieder in die Einlegestellung geschwenkt werden.

Die Lebensmittelzerkleinerungsvorrichtung 1 ist als Handgerät ausgebildet, so dass sie bei einem Zerkleinerungsvorgang, bei dem das Betätigungsteil 3 in die Schließstellung gegen das Basisteil 2 gedrückt wird, in einer Hand oder in zwei Händen gehalten werden kann.

Das Basisteil 2 weist ein erstes Handgriffteil 6 auf, während das Betätigungsteil 3 ein zweites Handgriffteil 7 aufweist. Das erste Handgriffteil 6 und das zweite Handgriffteil 7 können bei einem Zerkleinerungsvorgang mit den Fingern einer Hand gemeinsam umgriffen werden, so dass das erste Handgriffteil 6 und das zweite Handgriffteil 7 zangenartig gegeneinandergedrückt werden können.

Die Lebensmittelzerkleinerungsvorrichtung 1 weist eine Ankoppelvorrichtung 8 zum Ankoppeln eines Behälters 9 auf. Der Behälter 9 kann mittels der Ankoppelvorrichtung 8 derart angekoppelt werden, dass das durch das Schneidteil 10, 11 hindurch gedrückte, zerkleinerte Lebensmittelgut automatisch von dem angekoppelten Behälter 9 aufgefangen wird. Der Behälter 9 kann werkzeugfrei und zerstörungsfrei abgenommen und beispielsweise nach einem Entleerungsvorgang wieder angekoppelt werden. Hierzu weist die Ankoppelvorrichtung 8 eine (nicht näher dargestellte) Rastvorrichtung auf.

Die Lebensmittelzerkleinerungsvorrichtung 1 kann ganz unterschiedliche Schneideinsätze 10, 11 beinhalten.

In dem dargestellten Ausführungsbeispiel kann wahlweise entweder ein Einzel-Schneidteil 10 oder ein Kombinations-Schneidteil 11 in die Aufnahme 4 eingesetzt werden. Es können alternativ oder zusätzlich jedoch auch andersartige Schneideinsätze vorhanden sein.

Der Einzel-Schneidteil 10 weist (in dieser Figur nicht sichtbare) von einem Halterahmen getragene Schneidklingen auf, die sich in einem Mittelpunkt kreuzen. Mit dem Einzel-Schneidteil 10 kann ein Lebensmittelgut in keilförmige Spalten geschnitten werden.

Alternativ kann auch ein Kombinations-Schneidteil 11, der aus einem oberen Teil 12 und einem unteren Teil 13 besteht, in die Aufnahme 4 eingesetzt werden. Der Kombinations-Schneidteil 11 zeichnet sich dadurch aus, dass der obere Teil 12 und der untere Teil 13 jeweils zueinander parallele Schneidklingen aufweisen. Die Schneidklingen des oberen Teils 12 sind parallel zueinander ausgerichtet. Auch die Schneidklingen des unteren Teils 13 sind parallel zueinander ausgerichtet. Sowohl der obere Teil 12, als auch der untere Teil 13 weisen jeweils einen Halterahmen auf, der die Schneidklingen trägt. Die Halterahmen sind mit Vorsprüngen und Einbuchtungen versehen, die es erlauben, die Halterahmen formschlüssig aufeinander setzten zu können. Auf diese Weise ist verhindert, dass sich die Halterahmen ungewollt gegeneinander verschieben.

Der obere Teil 12 und der untere Teil 13 können zum Schneiden eines Lebensmittelgutes in feine Scheiben mit gleich ausgerichteten Schneidklingen übereinander in der Aufnahme angeordnet werden. Alternativ ist es auch möglich, den oberen Teil 12 und den unteren Teil 13 um 90 Grad zueinander gedreht, also mit einer gekreuzten Anordnung der Schneidklingen, in die Aufnahme einzufügen, um ein Lebensmittelgut in im Querschnitt quadratische Stifte schneiden zu können.

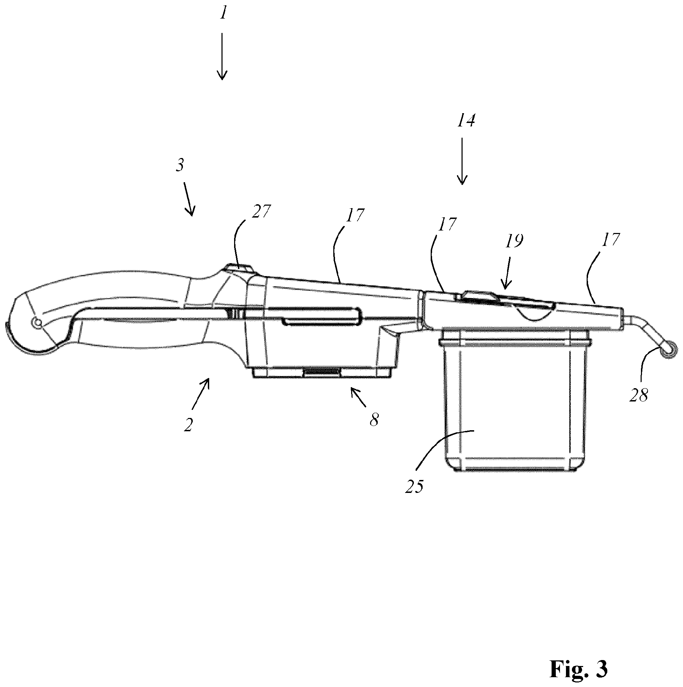

Das Lebensmittelzerkleinerungssystem weist außerdem ein zusätzliches Zerkleinerungswerkzeug 14 auf, das an der Lebensmittelzerkleinerungsvorrichtung 1 in einer (in den Figuren 3, 4 und 5 näher dargestellten) Arbeitsposition festlegbar ist und das einen Befestigungsabschnitt 15 sowie einen Werkzeugabschnitt 16 aufweist.

Zum Herbeiführen der Arbeitsposition wird der Befestigungsabschnitt 15 anstelle eines der Schneidteile 10, 11 in die Aufnahme 4 eingesetzt und das Betätigungsteil 3 in die Schließstellung überführt. Hierdurch wird der Befestigungsabschnitt 15 formschlüssig zwischen dem Basisteil 2 und dem Betätigungsteil 3 eingeklemmt, wobei der Werkzeugabschnitt 16 in der Arbeitsposition außerhalb der Aufnahme 4 angeordnet ist.

Um das zusätzliche Zerkleinerungswerkzeug 14 wieder von der Lebensmittelzerkleinerungsvorrichtung 1 zu lösen, muss der Benutzer lediglich das Betätigungsteil 3 von der Schließstellung zurück in die Einlegstellung schwenken, so dass der rahmenförmig ausgebildete Befestigungsabschnitt 15 wieder aus der Aufnahme 4 entnommen werden kann.

Die Lebensmittelzerkleinerungsvorrichtung 1 weist eine Arretiervorrichtung 26 auf, mittels der das Basisteil 2 und das Betätigungsteil 3 in der Schließstellung relativ zueinander arretiert werden können. Die Arretiervorrichtung 26 weist einen Bedienknopf 27 auf, mittels dem zwischen einer Arretierstellung und einer Freigabestellung umgeschaltet werden kann. Die Arretiervorrichtung 26 hat den ganz besonderen Vorteil, dass der Benutzer das erste Handgriffteil 6 und das zweite Handgriffteil 7 nicht permanent mit einer Hand geschlossen halten muss, um sicherzustellen, dass der Befestigungsabschnitt 15 zwischen dem Basisteil 2 und dem Betätigungsteil 3 eingeklemmt bleibt. Vielmehr kann der Benutzer die Arretiervorrichtung 26 mittels des Bedienknopfes 27 in einer Arretierposition überführen, die bewirkt, dass das Basisteil 2 und das Betätigungsteil 3 in der Einlegestellung relativ zueinander arretiert sind und sich der Befestigungsabschnitt 15 nicht ungewollt lösen kann.

Der Befestigungsabschnitt 15 könnte (anders als bei der dargestellten Ausführung) zusätzlich auch als ein Schneidteil ausgebildet sein und Schneidklingen aufweisen, so dass die Lebensmittelzerkleinerungsvorrichtung 1 auch mit dem als weiteres Schneidteil fungierenden Befestigungsabschnitt 15 betrieben werden könnte.

Das zusätzliche Zerkleinerungswerkzeug 14 bildet in der (insbesondere in den Figuren 3 bis 5 dargestellten) Arbeitsposition zusammen mit einem Bauteil der Lebensmittelzerkleinerungsvorrichtung 1 einen Hobel oder eine Reibe. Die Lebensmittelzerkleinerungsvorrichtung 1 stellt einen Teil einer Gleitbahn 17 des Hobels oder der Reibe bereit. Ein weiterer Teil der Gleitbahn 17 ist Bestandteil des Werkzeugabschnitts 16.

Das zusätzliche Zerkleinerungswerkzeug 14 weist im Bereich des Werkzeugabschnitts 16 eine weitere Aufnahme 18 auf, in die ein Schneid- oder Reibeinsatz, insbesondere zerstörungsfrei wieder lösbar und/oder verrastend, eingefügt werden kann. Der Schneid- oder Reibeinsatz 19 kann beispielsweise als Hobeleinsatz 20 ausgebildet sein, der ein Hobelmesser 21 aufweist. Der Schneid- oder Reibeinsatz 19 kann beispielsweise auch als Julienne-Einsatz 22 ausgebildet sein, der eine Vielzahl von Julienne-Messern 23 aufweist. Der Schneid- oder Reibeinsatz kann beispielsweise auch eine Vielzahl von Reibvorsprüngen aufweisen.

In der Arbeitsposition kann ein zu zerkleinerndes Lebensmittelgut entlang der Gleitbahn 17 hin und her bewegt werden, so dass das zu zerkleinerndes Lebensmittelgut fortlaufend immer wieder über den Schneid- oder Reibeinsatz 19 geführt wird und so sukzessive zerkleinert wird.

Das zusätzliche Zerkleinerungswerkzeug 14 weist eine weitere Ankoppelvorrichtung 24 zum Ankoppeln eines weiteren Behälters 25 auf. Der weitere Behälter 25 kann mittels der weiteren Ankoppelvorrichtung 24 derart angekoppelt werden, dass mittels des zusätzlichen Zerkleinerungswerkzeugs 14 zerkleinertes Lebensmittelgut automatisch von dem angekoppelten weiteren Behälter 25 aufgefangen wird. Die weitere Ankoppelvorrichtung 24 ist vorzugsweise derart ausgebildet, dass der weitere Behälter 25 werkzeugfrei und jeweils zerstörungsfrei an- und abgekoppelt werden kann. Hierzu ist vorzugsweise eine Rastvorrichtung vorhanden.

Die Ankoppelvorrichtung 8 und die weitere Ankoppelvorrichtung 24 sind gleich ausgebildet. Ebenso sind der Behälter 9 und der weitere Behälter 25 gleich ausgebildet. Das dargestellte Lebensmittelzerkleinerungssystem hat daher den ganz besonderen Vorteil, dass der Behälter 9 wahlweise auch an der weiteren Ankoppelvorrichtung 24 angekoppelt werden kann und/oder dass der weitere Behälter 25 wahlweise auch an der Ankoppelvorrichtung 8 angekoppelt werden kann. Es ist auch möglich, dass insgesamt nur ein einziger Behälter 9, 25 verwendet wird, wobei dieser in Abhängigkeit davon, ob gerade Lebensmittelgut mittels der Lebensmittelzerkleinerungsvorrichtung 1 oder mittels des zusätzlichen Zerkleinerungswerkzeugs 14 zerkleinert wird, entweder an der Ankoppelvorrichtung 8 oder an der weiteren Ankoppelvorrichtung 24 angekoppelt wird.

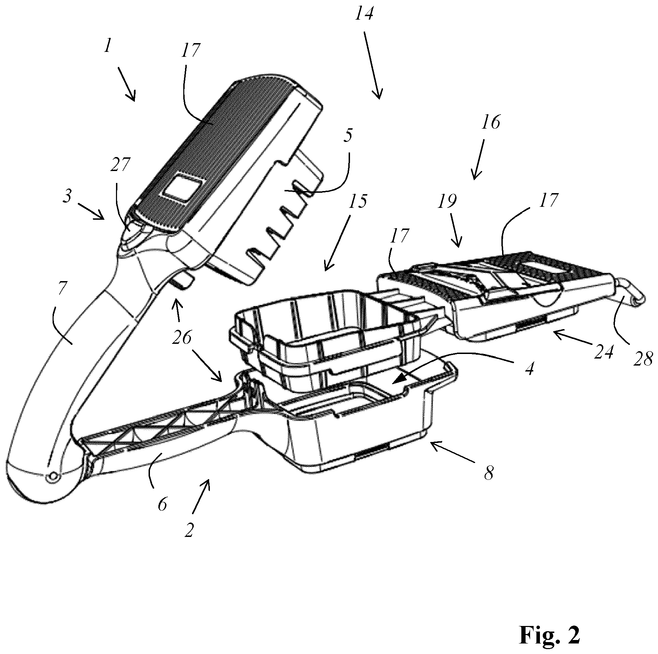

Figur 2 zeigt Teile des erfindungsgemäßen Lebensmittelzerkleinerungssystems bei dem Vorgang des Herbeiführens der Arbeitsposition. In die Aufnahme 4 der Lebensmittelzerkleinerungsvorrichtung 1 ist kein Schneidteil 10, 11 eingesetzt. Stattdessen wird zur Herbeiführung der Arbeitsposition der Befestigungsabschnitt 15 des zusätzlichen Zerkleinerungswerkzeugs 14 in die Aufnahme 4 eingefügt, während sich das Betätigungsteil 3 in der Einlegestellung befindet. Anschließend wird das Betätigungsteil 3 in die Schließstellung überführt, so dass der rahmenförmig ausgebildete Befestigungsabschnitt 15 formschlüssig zwischen der Wandung der Aufnahme 4 und dem Pressstempel 5 des Betätigungsteils 3 gehalten ist, was in den Figuren 3 bis 5 dargestellt ist.

Die Figuren 3 bis 5 zeigen in einer Seitenansicht, einer Ansicht von oben und in einer perspektivischen Darstellung die Lebensmittelzerkleinerungsvorrichtung 1 mit dem angekoppelten zusätzlichen Zerkleinerungswerkzeug 14. Es ist deutlich zu erkennen, dass das Betätigungsteil 3 mit seiner Oberseite einen Teil der Gleitbahn 17 bereitstellt, entlang der ein zu zerkleinerndes Lebensmittelgut hin und her geführt werden kann.

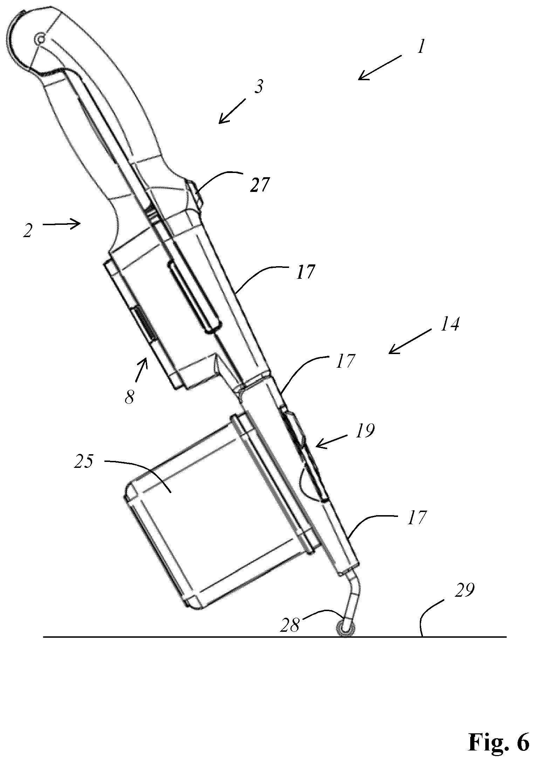

Das zusätzliche Zerkleinerungswerkzeug 14 weist an seinem, dem Befestigungsabschnitt 15 abgewandten Ende einen bügelartig ausgebildeten Aufstellfuß 28 auf, der bei einem Zerkleinerungsvorgang, bei dem ein zu zerkleinerndes Lebensmittelgut mit einer Hand über die Gleitbahn 17 hin- und hergeführt wird, auf eine Arbeitsfläche 29, beispielsweise einer Tischplatte, aufgelegt werden kann, während die in der Schließstellung befindliche Lebensmittelzerkleinerungsvorrichtung 1 gleichzeitig mit der anderen Hand frei gehalten wird, was in Figur 6 dargestellt ist.

Das zusätzliche Zerkleinerungswerkzeug 14 ist zerstörungsfrei wieder lösbar an der Lebensmittelzerkleinerungsvorrichtung 1 in einer Arbeitsposition festlegbar, wobei der Werkzeugabschnitt 16 in der Arbeitsposition außerhalb der Aufnahme 4 und außerhalb des Schwenkbereichs des gelenkig mit dem Basisteil 2 verbundenen Betätigungsteils 3 angeordnet ist.

### Bezugszeichenliste:

- 1: Lebensmittelzerkleinerungsvorrichtung
- 2: Basisteil
- 3: Betätigungsteil
- 4: Aufnahme
- 5: Pressstempel
- 6: erstes Handgriffteil
- 7: zweites Handgriffteil
- 8: Ankoppelvorrichtung
- 9: Behälter
- 10: Einzel-Schneidteil
- 11: Kombinations- Schneidteil
- 12: oberer Teil des Kombinations- Schneidteils 11
- 13: unterer Teil des Kombinations- Schneidteils 11
- 14: zusätzliches Zerkleinerungswerkzeug
- 15: Befestigungsabschnitt
- 16: Werkzeugabschnitt
- 17: Gleitbahn
- 18: weitere Aufnahme
- 19: Schneid- oder Reibeinsatz
- 20: Hobeleinsatz
- 21: Hobelmesser
- 22: Julienne-Einsatz
- 23: Julienne-Messer
- 24: weitere Ankoppelvorrichtung
- 25: weiterer Behälter
- 26: Arretiervorrichtung
- 27: Bedienknopf
- 28: Aufstellfuß
- 29: Arbeitsfläche
- 30: Träger
- 31: Gegenbefestigungsmittel
- 32: Bajonettvorsprung
- 33: Bajonettaufnahme
- 34: Vorsprung
- 35: Ausnehmung
- 36: Rastnase
- 37: Rastöffnung
- 38: Längliche Ausnehmung

## Patentansprüche

1. Lebensmittelzerkleinerungssystem aufweisend eine Lebensmittelzerkleinerungsvorrichtung (1) mit einem Basisteil (2), das eine Aufnahme (4) für ein Schneidteil aufweist, und mit einem gelenkig mit dem Basisteil (2) verbundenen Betätigungsteil (3), das zum Hindurchdrücken von zu zerkleinerndem Lebensmittelgut durch ein in die Aufnahme (4) eingesetztes Schneidteil aus einer Einlegestellung gegen das Schneidteil in eine Schließstellung und anschließend von der Schließstellung wieder in die Einlegestellung schwenkbar ist, **gekennzeichnet durch** ein zusätzliches Zerkleinerungswerkzeug (14), das an der Lebensmittelzerkleinerungsvorrichtung (1) in einer Arbeitsposition festlegbar ist und das einen Befestigungsabschnitt (15) sowie einen Werkzeugabschnitt (16) aufweist, wobei der Befestigungsabschnitt (15) in der Arbeitsposition formschlüssig zwischen dem Basisteil (2) und dem Betätigungsteil (3) eingeklemmt ist und wobei der Werkzeugabschnitt (16) in der Arbeitsposition außerhalb der Aufnahme (4) angeordnet ist.

2. Lebensmittelzerkleinerungssystem nach Anspruch 1, **dadurch gekennzeichnet, dass**
a. der Befestigungsabschnitt (15), insbesondere formschlüssig und/oder verrastend, in die Aufnahme (4) einfügbar ist, oder dass
b. der Befestigungsabschnitt (15) anstelle des Schneidteils, insbesondere formschlüssig und/oder verrastend, in die Aufnahme (4) einfügbar ist.

3. Lebensmittelzerkleinerungssystem nach Anspruch 1 oder 2, **dadurch gekennzeichnet, dass**
a. das Betätigungsteil (3) einen dem Basisteil (2) zugewandten Pressstempel aufweist, oder dass
b. das Betätigungsteil (3) einen dem Basisteil (2) zugewandten Pressstempel aufweist, wobei der Befestigungsabschnitt (15) einen, insbesondere in die Aufnahme (4) einfügbaren, Rahmen aufweist, in den der Pressstempel (5) in der Arbeitsposition, insbesondere formschlüssig, eingreift.

4. Lebensmittelzerkleinerungssystem nach einem der Ansprüche 1 bis 3, **dadurch gekennzeichnet, dass** das zusätzliche Zerkleinerungswerkzeug (14) an der Lebensmittelzerkleinerungsvorrichtung (1) festlegbar ist, ohne dass das Basisteil (2) und/oder das Betätigungsteil (3) hierfür zuvor verändert oder voneinander getrennt werden müssen.

5. Lebensmittelzerkleinerungssystem nach einem der Ansprüche 1 bis 4, **dadurch gekennzeichnet, dass**
a. das zusätzliche Zerkleinerungswerkzeug (14) als Hobel oder als Reibe ausgebildet ist oder dass
b. das zusätzliche Zerkleinerungswerkzeug (14) in der Arbeitsposition zusammen mit wenigstens einem Bauteil der Lebensmittelzerkleinerungsvorrichtung (1) einen Hobel oder eine Reibe bildet.

6. Lebensmittelzerkleinerungssystem nach Anspruch 5, **dadurch gekennzeichnet, dass**
a. die Lebensmittelzerkleinerungsvorrichtung (1) eine Gleitbahn (17) oder wenigstens einen Teil der Gleitbahn (17) des Hobels oder der Reibe bereitstellt, entlang der ein mittels des Hobels oder der Reibe zu zerkleinerndes Lebensmittelgut hin und her führbar ist, oder dass
b. die Lebensmittelzerkleinerungsvorrichtung (1) eine Gleitbahn (17) oder wenigstens einen Teil der Gleitbahn (17) des Hobels oder der Reibe bereitstellt, entlang der ein mittels des Hobels oder der Reibe zu zerkleinerndes Lebensmittelgut hin und her führbar ist, wobei eine, insbesondere von dem Basisteil (2) abgewandte, Außenseite des Betätigungsteils (3) die Gleitbahn (17) oder den Teil der Gleitbahn (17) aufweist.

7. Lebensmittelzerkleinerungssystem nach Anspruch 5 oder 6, **dadurch gekennzeichnet, dass** das zusätzliche Zerkleinerungswerkzeug (14) eine weitere Aufnahme (4) aufweist, in die ein Schneid- oder Reibeinsatz, insbesondere zerstörungsfrei wieder lösbar und/oder verrastend, einfügbar ist.

8. Lebensmittelzerkleinerungssystem nach Anspruch 7, **dadurch gekennzeichnet, dass** der Schneid- oder Reibeinsatz wenigsten ein, insbesondere genau ein, Hobelmesser, oder mehrere Julienne-Messer oder mehrere Reibvorsprünge aufweist.

9. Lebensmittelzerkleinerungssystem nach Anspruch 7 oder 8, **dadurch gekennzeichnet, dass** das Lebensmittelzerkleinerungssystem mehrere unterschiedliche Schneid- oder Reibeinsätze aufweist, die wahlweise in die weitere Aufnahme (4) einfügbar sind.

10. Lebensmittelzerkleinerungssystem nach einem der Ansprüche 1 bis 9, **dadurch gekennzeichnet, dass**
a. die Lebensmittelzerkleinerungsvorrichtung (1) eine Ankoppelvorrichtung (8) zum Ankoppeln eines Behälters (9) aufweist, oder dass
b. die Lebensmittelzerkleinerungsvorrichtung (1) eine Ankoppelvorrichtung (8) zum Ankoppeln eines Behälters (9) aufweist, wobei ein Behälter (9) mittels der Ankoppelvorrichtung (8) derart ankoppelbar ist, dass mittels der Lebensmittelzerkleinerungsvorrichtung (1) zerkleinertes Lebensmittelgut automatisch von dem angekoppelten Behälter (9) aufgefangen wird.

11. Lebensmittelzerkleinerungssystem nach einem der Ansprüche 1 bis 10, **dadurch gekennzeichnet, dass**
a. das zusätzliche Zerkleinerungswerkzeug (14) eine weitere Ankoppelvorrichtung (24) zum Ankoppeln eines Behälters (9) aufweist, oder dass
b. das zusätzliche Zerkleinerungswerkzeug (14) eine weitere Ankoppelvorrichtung (24) zum Ankoppeln eines Behälters (9) aufweist, wobei ein Behälter (9) mittels der weiteren Ankoppelvorrichtung (24) derart ankoppelbar ist, dass mittels des zusätzlichen Zerkleinerungswerkzeugs (14) zerkleinertes Lebensmittelgut automatisch von dem angekoppelten Behälter (9) aufgefangen wird.

12. Lebensmittelzerkleinerungssystem nach Anspruch 10 und Anspruch 11, **dadurch gekennzeichnet, dass**
a. die Ankoppelvorrichtung (8) und die weitere Ankoppelvorrichtung (24) gleich ausgebildet sind, oder dass
b. die Ankoppelvorrichtung (8) und die weitere Ankoppelvorrichtung (24) gleich ausgebildet sind und dass wenigstens ein Behälter (9) vorhanden ist, der wahlweise mittels der Ankoppelvorrichtung (8) an die Lebensmittelzerkleinerungsvorrichtung (1) oder mittels der weiteren Ankoppelvorrichtung (24) an das zusätzliche Zerkleinerungswerkzeug (14) ankoppelbar ist.

13. Lebensmittelzerkleinerungssystem nach einem der Ansprüche 1 bis 12, **dadurch gekennzeichnet, dass**
a. die Lebensmittelzerkleinerungsvorrichtung (1) als Handgerät ausgebildet ist, das dazu ausgebildet und bestimmt ist, bei einem Zerkleinerungsvorgang, insbesondere ohne Abstellen auf einer Arbeitsfläche, in der Hand oder in den Händen gehalten zu werden, oder dass
b. die Lebensmittelzerkleinerungsvorrichtung (1) als Handgerät ausgebildet ist, das dazu ausgebildet und bestimmt ist, bei einem Zerkleinerungsvorgang, insbesondere ohne Abstellen auf einer Arbeitsfläche, in der Hand oder in den Händen gehalten zu werden, und dass das Basisteil (2) ein erstes Handgriffteil (6) aufweist und das Betätigungsteil (3) ein zweites Handgriffteil (7) aufweist, die beide mit den Fingern einer Hand gemeinsam umgreifbar und, insbesondere zangenartig, gegeneinander drückbar angeordnet sind.

14. Lebensmittelzerkleinerungssystem nach einem der Ansprüche 1 bis 13, **dadurch gekennzeichnet, dass** das zusätzliche Zerkleinerungswerkzeug (14) einen Aufstellfuß (28) aufweist, mittels dem das Zerkleinerungswerkzeug (1) bei einem Zerkleinerungsvorgang, bei dem ein zu zerkleinerndes Lebensmittelgut mit einer Hand über die Gleitbahn (17) hin- und hergeführt wird, an einer Arbeitsfläche abgestützt werden kann, während die in der Schließstellung befindliche Lebensmittelzerkleinerungsvorrichtung (1) gleichzeitig mit der anderen Hand frei gehalten wird.

15. Lebensmittelzerkleinerungssystem nach einem der Ansprüche 1 bis 14, **dadurch gekennzeichnet, dass** der Werkzeugabschnitt (16) in der Arbeitsposition außerhalb des Schwenkbereichs des Betätigungsteils (3) angeordnet ist.

## Claims

1. Food comminution system having a food comminution apparatus (1) with a base part (2) which has a receptacle (4) for a cutting part, and with an actuating part (3) which is connected in an articulated manner to the base part (2) and, in order to press a food product to be comminuted through a cutting part which is inserted into the receptacle (4), can be pivoted out of an inserting position against the cutting part into a closed position and subsequently from the closed position into the inserting position again, **characterized by** an additional comminution tool (14) which can be fixed in a working position on the food comminution apparatus (1) and which has a fastening portion (15) and a tool portion (16), the fastening portion (15) being clamped in between the base part (2) and the actuating part (3) in a positively locking manner in the working position, and the tool portion (16) being arranged outside the receptacle (4) in the working position.

2. Food comminution system according to Claim 1, **characterized in that**
a. the fastening portion (15) can be inserted into the receptacle (4), in particular in a positively locking and/or latching manner, or **in that**
b. the fastening portion (15) can be inserted into the receptacle (4), in particular in a positively locking and/or latching manner, instead of the cutting part.

3. Food comminution system according to Claim 1 or 2, **characterized in that**
a. the actuating part (3) has a pressing plunger which faces the base part (2), or **in that**
b. the actuating part (3) has a pressing plunger which faces the base part (2), the fastening portion (15) having a frame which, in particular, can be inserted into the receptacle (4) and into which the pressing plunger (5) engages, in particular in a positively locking manner, in the working position.

4. Food comminution system according to one of Claims 1 to 3, **characterized in that** the additional comminution tool (14) can be fixed on the food comminution apparatus (1), without it being necessary for this purpose for the base part (2) and/or the actuating part (3) to be modified or separated from one another.

5. Food comminution system according to one of Claims 1 to 4, **characterized in that**
a. the additional comminution tool (14) is configured as a slicer or has a grater, or **in that**
b. the additional comminution tool (14) forms a slicer or a grater together with at least one component of the food comminution apparatus (1) in the working position.

6. Food comminution system according to Claim 5, **characterized in that**
a. the food comminution apparatus (1) provides a sliding track (17) or at least one part of the sliding track (17) of the slicer or the grater, along which sliding track (17) a food product which is to be comminuted by means of the slicer or the grater can be guided to and fro, or **in that**
b. the food comminution apparatus (1) provides a sliding track (17) or at least one part of the sliding track (17) of the slicer or the grater, along which sliding track (17) food product which is to be comminuted by means of the slicer or the grater can be guided to and fro, an outer side, in particular facing away from the base part (2), of the actuating part (3) having the sliding track (17) or the part of the sliding track (17).

7. Food comminution system according to Claim 5 or 6, **characterized in that** the additional comminution tool (14) has a further receptacle (4), into which a cutting or grating insert can be inserted, in particular in a latching manner and/or such that it can be released again without destruction.

8. Food comminution system according to Claim 7, **characterized in that** the cutting or grating insert has at least one, in particular precisely one, slicing blade, or a plurality of julienne blades or a plurality of grating projections.

9. Food comminution system according to Claim 7 or 8, **characterized in that** the food comminution system has a plurality of different cutting or grating inserts which can be inserted selectively into the further receptacle (4) .

10. Food comminution system according to one of Claims 1 to 9, **characterized in that**
a. the food comminution apparatus (1) has a coupling apparatus (8) for coupling a container (9) or **in that**
b. the food comminution apparatus (1) has a coupling apparatus (8) for coupling a container (9), it being possible for a container (9) to be coupled by means of the coupling apparatus (8) in such a way that a food product which is comminuted by means of the food comminution apparatus (1) is automatically caught by the coupled container (9).

11. Food comminution apparatus according to one of Claims 1 to 10, **characterized in that**
a. the additional comminution tool (14) has a further coupling apparatus (24) for coupling a container (9), or **in that**
b. the additional comminution tool (14) has a further coupling apparatus (24) for coupling a container (9), it being possible for a container (9) to be coupled by means of the further coupling apparatus (24) in such a way that a food product which is comminuted by means of the additional comminution tool (14) is automatically caught by the coupled container (9).

12. Food comminution system according to Claim 10 and Claim 11, **characterized in that**
a. the coupling apparatus (8) and the further coupling apparatus (24) are of identical configuration, or **in that**
b. the coupling apparatus (8) and the further coupling apparatus (24) are of identical configuration, and **in that** there is at least one container (9) which can selectively be coupled by means of the coupling apparatus (8) to the food comminution apparatus (1) or by means of the further coupling apparatus (24) to the additional comminution tool (14).

13. Food comminution system according to one of Claims 1 to 12, **characterized in that**
a. the food comminution apparatus (1) is configured as a handheld unit which is configured and intended to be held in one hand or in both hands during a comminution operation, in particular without being set down on a work surface, or **in that**
b. the food comminution apparatus (1) is configured as a handheld unit which is configured and intended to be held in one hand or on both hands during a comminution operation, in particular without being set down on a work surface, and **in that** the base part (2) has a first handle part (6) and the actuating part (3) has a second handle part (7), which handle parts (6, 7) can both be reached around jointly by way of the fingers of one hand, and are arranged such that they can be pressed against one another, in particular in a tongs-like manner.

14. Food comminution system according to one of Claims 1 to 13, **characterized in that** the additional comminution tool (14) has a placement base (28), by means of which the comminution tool (1) can be supported on a work surface during a comminution operation, during which the food product to be comminuted is guided to and fro over the sliding track (17) by way of one hand, whereas the food comminution apparatus (1) which is situated in the closed position is held freely at the same time by way of the other hand.

15. Food comminution system according to one of Claims 1 to 14, **characterized in that** the tool portion (16) is arranged outside the pivoting region of the actuating part (3) in the working position.

## Revendications

1. Système de broyage de denrées alimentaires présentant un dispositif de broyage de denrées alimentaires (1) avec une partie de base (2) qui présente un logement (4) pour une partie de coupe, et avec une partie d'actionnement (3) reliée de manière articulée à la partie de base (2), qui peut pivoter d'une position d'introduction contre la partie de coupe à une position de fermeture, puis de la position de fermeture de nouveau à la position d'introduction, pour faire passer par pression une denrée alimentaire à broyer à travers une partie de coupe insérée dans le logement (4), **caractérisé par** un outil de broyage supplémentaire (14) qui peut être immobilisé sur le dispositif de broyage de denrées alimentaires (1) dans une position de travail et qui présente une section de fixation (15) ainsi qu'une section d'outil (16), la section de fixation (15) étant serrée par complémentarité de forme entre la partie de base (2) et la partie d'actionnement (3) dans la position de travail, et la section d'outil (16) étant agencée à l'extérieur du logement (4) dans la position de travail.

2. Système de broyage de denrées alimentaires selon la revendication 1, **caractérisé en ce que**
a. la section de fixation (15) peut être insérée dans le logement (4), notamment par complémentarité de forme et/ou par encliquetage, ou **en ce que**
b. la section de fixation (15) peut être insérée dans le logement (4) à la place de la partie de coupe, notamment par complémentarité de forme et/ou par encliquetage.

3. Système de broyage de denrées alimentaires selon la revendication 1 ou 2, **caractérisé en ce que**
a. la partie d'actionnement (3) présente un vérin presseur tourné vers la partie de base (2), ou **en ce que**
b. la partie d'actionnement (3) présente un vérin presseur tourné vers la partie de base (2), la section de fixation (15) présentant un cadre, notamment insérable dans le logement (4), dans lequel le vérin presseur (5) s'engage dans la position de travail, notamment par complémentarité de forme.

4. Système de broyage de denrées alimentaires selon l'une quelconque des revendications 1 à 3, **caractérisé en ce que** l'outil de broyage supplémentaire (14) peut être immobilisé sur le dispositif de broyage de denrées alimentaires (1) sans que la partie de base (2) et/ou la partie d'actionnement (3) ne doivent être modifiées ou séparées l'une de l'autre au préalable à cet effet.

5. Système de broyage de denrées alimentaires selon l'une quelconque des revendications 1 à 4, **caractérisé en ce que**
a. l'outil de broyage supplémentaire (14) est configuré sous forme de rabot ou sous forme de râpe, ou **en ce que**
b. dans la position de travail, l'outil de broyage supplémentaire (14) forme un rabot ou une râpe avec au moins un composant du dispositif de broyage de denrées alimentaires (1).

6. Système de broyage de denrées alimentaires selon la revendication 5, **caractérisé en ce que**
a. le dispositif de broyage de denrées alimentaires (1) fournit une glissière (17) ou au moins une partie de la glissière (17) du rabot ou de la râpe, le long de laquelle une denrée alimentaire à broyer au moyen du rabot ou de la râpe peut être déplacée en va-et-vient, ou **en ce que**
b. le dispositif de broyage de denrées alimentaires (1) fournit une glissière (17) ou au moins une partie de la glissière (17) du rabot ou de la râpe, le long de laquelle une denrée alimentaire à broyer au moyen du rabot ou de la râpe peut être déplacée en va-et-vient, un côté extérieur de la partie d'actionnement (3), notamment détourné de la partie de base (2), présentant la glissière (17) ou la partie de la glissière (17).

7. Système de broyage de denrées alimentaires selon la revendication 5 ou 6, **caractérisé en ce que** l'outil de broyage supplémentaire (14) présente un autre logement (4) dans lequel un insert de coupe ou de râpage peut être inséré, notamment de manière à pouvoir être détaché et/ou encliqueté sans destruction.

8. Système de broyage de denrées alimentaires selon la revendication 7, **caractérisé en ce que** l'insert de coupe ou de râpage présente au moins une, notamment exactement une, lame de rabotage, ou plusieurs lames à julienne ou plusieurs saillies de râpage.

9. Système de broyage de denrées alimentaires selon la revendication 7 ou 8, **caractérisé en ce que** le système de broyage de denrées alimentaires présente plusieurs inserts de coupe ou de râpage différents qui peuvent être insérés de manière sélective dans l'autre logement (4).

10. Système de broyage de denrées alimentaires selon l'une quelconque des revendications 1 à 9, **caractérisé en ce que**
a. le dispositif de broyage de denrées alimentaires (1) présente un dispositif d'accouplement (8) pour accoupler un récipient (9), ou **en ce que**
b. le dispositif de broyage de denrées alimentaires (1) présente un dispositif d'accouplement (8) pour accoupler un récipient (9), un récipient (9) pouvant être accouplé au moyen du dispositif d'accouplement (8) de telle sorte que des denrées alimentaires broyées au moyen du dispositif de broyage de denrées alimentaires (1) sont automatiquement collectées par le récipient accouplé (9).

11. Système de broyage de denrées alimentaires selon l'une quelconque des revendications 1 à 10, **caractérisé en ce que**
a. l'outil de broyage supplémentaire (14) présente un autre dispositif d'accouplement (24) pour accoupler un récipient (9), ou **en ce que**
b. l'outil de broyage supplémentaire (14) présente un autre dispositif d'accouplement (24) pour accoupler un récipient (9), un récipient (9) pouvant être accouplé au moyen de l'autre dispositif d'accouplement (24) de telle sorte que des denrées alimentaires broyées au moyen de l'outil de broyage supplémentaire (14) sont automatiquement collectées par le récipient accouplé (9) .

12. Système de broyage de denrées alimentaires selon la revendication 10 et la revendication 11, **caractérisé en ce que**
a. le dispositif d'accouplement (8) et l'autre dispositif d'accouplement (24) sont configurés de la même manière, ou **en ce que**
b. le dispositif d'accouplement (8) et l'autre dispositif d'accouplement (24) sont configurés de la même manière et **en ce qu'**au moins un récipient (9) est présent, qui peut être accouplé de manière sélective au dispositif de broyage de denrées alimentaires (1) au moyen du dispositif d'accouplement (8) ou à l'outil de broyage supplémentaire (14) au moyen de l'autre dispositif d'accouplement (24).

13. Système de broyage de denrées alimentaires selon l'une quelconque des revendications 1 à 12, **caractérisé en ce que**
a. le dispositif de broyage de denrées alimentaires (1) est configuré sous forme d'appareil manuel qui est configuré et adapté pour être tenu dans la main ou dans les mains lors d'une opération de broyage, notamment sans être posé sur une surface de travail, ou **en ce que**
b. le dispositif de broyage de denrées alimentaires (1) est configuré sous forme d'appareil manuel qui est configuré et adapté pour être tenu dans la main ou dans les mains lors d'une opération de broyage, notamment sans être posé sur une surface de travail, et **en ce que** la partie de base (2) présente une première partie de poignée (6) et la partie d'actionnement (3) présente une deuxième partie de poignée (7), qui peuvent toutes deux être saisies ensemble par les doigts d'une main et sont agencées de manière à pouvoir être pressées l'une contre l'autre, notamment à la manière de pinces.

14. Système de broyage de denrées alimentaires selon l'une quelconque des revendications 1 à 13, **caractérisé en ce que** l'outil de broyage supplémentaire (14) présente un pied de pose (28) au moyen duquel l'outil de broyage (1) peut être posé sur une surface de travail lors d'une opération de broyage, lors de laquelle une denrée alimentaire à broyer est déplacée en va-et-vient par une main sur la glissière (17), tandis que le dispositif de broyage de denrées alimentaires (1) se trouvant dans la position de fermeture est en même temps tenu librement par l'autre main.

15. Système de broyage de denrées alimentaires selon l'une quelconque des revendications 1 à 14, **caractérisé en ce que** la section d'outil (16) est agencée dans la position de travail à l'extérieur de la zone de pivotement de la partie d'actionnement (3).
